# EUROPÄISCHE PATENTANMELDUNG

(11) **EP 4 570 960 A1**
(43) Veröffentlichungstag der Anmeldung: **18.06.2025**
(21) Anmeldenummer: 23216528.2
(22) Anmeldetag: 14.12.2023
(51) Int. Cl.: C25B 3/26, C25B 9/63, C25B 9/17, C25B 9/65

(54) **ELEKTROLYSEZELLE MIT OPTIMIERTER KONTAKTIERUNG EINER KATALYSATORSCHICHT**

(71) Anmelder: Siemens Energy Global GmbH & Co. KG, 81739 München (DE)
(72) Erfinder: Magori, Erhard, 85622 Feldkirchen (DE); Pastusiak, Remigiusz, 81739 München (DE); Simon, Elfriede, 80639 München (DE); Sahin, Baran, 81373 München (DE); Tawil, Angelika, 80935 München (DE); Wiesner-Fleischer, Kerstin, 85635 Höhenkirchen-Siegertsbrunn (DE)

(57) **Zusammenfassung**

Die Erfindung betrifft eine Elektrolysezelle (01) zur Elektrolyse von CO2 mit einer Kathodenseite (02) und einer Anodenseite (03). Dabei umfasst die Elektrolysezelle (01) eine Kathodenplatte (04), eine Gaskammer (06), eine Gasdiffusionsschicht (08), eine Katalysatorschicht (09), eine Wasserkammer (07) und eine Anodenplatte (05). Die Kontaktierung der Katalysatorschicht (09) wird durch die Verwendung mehrerer Strombrücken (10) optimiert. Hierzu sind diese (10) elektrisch leitend mit der Kathodenplatte (04) und der Katalysatorschicht (09) verbunden und durchdringen dabei die Gasdiffusionsschicht (08).

## Beschreibung

### TECHNISCHES GEBIET

Die Erfindung betrifft eine Elektrolysezelle zur Elektrolyse von CO2. Diese weist eine Gaskammer enthaltend CO2 und eine Wasserkammer enthaltend ein Elektrolyt auf, welche durch eine Gasdiffusionsschicht und eine Katalysatorschicht voneinander getrennt sind. Dabei ist eine Kontaktierung der Katalysatorschicht erforderlich.

### HINTERGRUND

Erneuerbarer Strom, wie beispielsweise Sonnen- und Windenergie, kann an einigen Standorten in einem über den örtlichen Bedarf hinausgehenden Maß zur Verfügung gestellt werden. Problematisch ist in diesem Fall die effektive Nutzung des verfügbaren Stroms. Eine Möglichkeit ist die Elektrolyse von Wasser zu Wasserstoff und Sauerstoff. Problematisch sind jedoch die Speicherung und der Transport von Wasserstoff. Weiterhin ist es bekannt, mittels einer elektrochemischen Umwandlung von CO2 den verfügbaren erneuerbaren Strom zu nutzen und dabei das Treibhausgas CO2 als Produkt zu binden. Die elektrochemische Reduktionsreaktion von Kohlendioxid (CO2) zu Kohlenwasserstoffen durch die CO2 Elektrolyse stellt eine vielversprechende Alternative zu anderen Energiespeicherstrategien dar.

Zur Reduktion von CO2 werden Elektrolysezellen eingesetzt, welche eine Anodenseite und eine Kathodenseite aufweisen. Auf der Anodenseite befindet sich eine Anode, welche in Kontakt mit einem flüssigen Elektrolyt steht. Auf der Kathodenseite befindet sich die Kathode, welche in Kontakt mit dem zu reduzierenden CO2 steht. Bei der regulär zum Einsatz kommenden Elektrolysezelle ist auf der Kathodenseite eine Kavität zur Aufnahme des CO2 und auf der Anodenseite eine Kavität zur Aufnahme des Elektrolyten angeordnet, welche durch eine Gasdiffusionselektrode voneinander getrennt.

Die generelle Funktionsweise einer Elektrolysezelle zur Elektrolyse von CO2 ist dem Fachmann hinlänglich bekannt. Diese wird beispielsweise in der WO 2023 217624 A1 oder der WO 2019 096985 A1 beschrieben.

Als vorteilhaft hat es sich erwiesen, wenn die Gasdiffusionselektrode von einer nicht-leitenden Gasdiffusionsschicht und einer leitenden Katalysatorschicht gebildet wird. Dabei ist eine Kontaktierung der Katalysatorschicht von der Kathodenseite erforderlich.

Die Kontaktierung der Katalysatorschicht erfolgt in aller Regel am umlaufenden Rand der Katalysatorschicht, beispielsweise durch aufgebrachte Kupferbänder. Sofern die Ausdehnung der Elektrolysezelle klein ist, kann dabei eine hinreichend gleichmäßige Spannungsverteilung über die Fläche der Katalysatorschicht erreicht werden.

Problem ist die begrenzte Leitfähigkeit der Katalysatorschicht und der für die Katalysatorschicht üblicherweise eingesetzten geringe Schichtdicke. In Verbindung mit der Notwendigkeit, eine für eine praxistaugliche Anwendung hinreichende Fläche der Katalysatorschicht bereitzustellen, kann eine hinreichende und insbesondere gleichmäßige Spannung zwischen der Katalysatorschicht und der Anode nicht ohne weiteres gewährleistet werden.

Zur Lösung des Problems wird in bekannten Ausführungen vorgeschlagen, ein leitendes Gitter, beispielsweise aus Kupfer, auf der Katalysatorschicht gegenüberliegend zur Gasdiffusionsschicht, d.h. auf der Anodenseite im Elektrolyten, anzuordnen.

Diese Anordnung weist jedoch mehrere Nachteile auf. Einerseits kann die Anordnung des leitenden Gitters im Elektrolyten sich nachteilig auf den elektrochemischen Prozess auswirken. Ungünstig ist weiterhin der geringere Abstand der Anode zum leitenden Gitter im Verhältnis zum Abstand der Anode zur Katalysatorschicht. Darüber hinaus wird die wirksame Fläche der Katalysatorschicht durch das Gitter reduziert.

### ZUSAMMENFASSUNG DER ERFINDUNG

Aufgabe der vorliegenden Erfindung ist es, eine möglichst gleichmäßige Spannung über die Fläche der Katalysatorschicht bereitzustellen. Dabei soll die effektiv zur Verfügung stehende Fläche der Katalysatorschicht möglichst groß sein.

Die Aufgabe wird durch eine erfindungsgemäße Ausführungsform nach der Lehre des Anspruchs 1 gelöst. Vorteilhafte Ausführungsformen sind Gegenstand der Unteransprüche.

Die gattungsgemäße Elektrolysezelle dient bestimmungsgemäß zur Elektrolyse von CO2. Diese weist eine Kathodenseite und eine gegenüberliegende Anodenseite auf. Ausgehend von der Kathodenseite in unmittelbarer oder mittelbarer Folge umfasst die Elektrolysezelle
- eine Kathodenplatte,
- eine Gaskammer,
- eine Gasdiffusionsschicht,
- eine Katalysatorschicht,
- eine Wasserkammer, und
- eine Anodenplatte.

Die Kathodenplatte bildet zusammen mit der Anodenplatte beidseitig den Abschluss der Elektrolysezelle.

Bei der Gaskammer handelt es sich um eine Kavität in der Elektrolysezelle, der im Betrieb der Elektrolysezelle bestimmungsgemäß CO2 zugeführt wird. Bei der Wasserkammer handelt es sich um eine weitere Kavität, in der sich im Betrieb der Elektrolysezelle bestimmungsgemäß ein Elektrolyt befindet.

Die Gasdiffusionsschicht zusammen mit der Katalysatorschicht bilden eine Gasdiffusionselektrode. Diese trennt die Gaskammer von der Wasserkammer. Dabei ist es funktionsbedingt notwendig, dass die Gasdiffusionsschicht für CO2 durchlässig ist, den Durchtritt von Flüssigkeit jedoch verhindert.

Die Gasdiffusionsschicht ist in besonders vorteilhafter Weise elektrisch nicht-leitend. Dazu besteht diese aus einem elektrisch nicht-leitenden Material oder weist zumindest eine elektrisch nicht-leitende Beschichtung auf.

Demgegenüber ist die Katalysatorschicht besonders vorteilhaft elektrisch leitend. Hierzu besteht diese aus einem elektrisch leitenden Material besteht oder weist zumindest eine elektrisch leitende Beschichtung auf.

Entsprechend wird eine vorteilhafte Gasdiffusionselektrode in diesem Fall von einer nicht-leitenden Gasdiffusionsschicht und einer leitenden Katalysatorschicht gebildet.

Darüber hinaus ist es möglich, die Katalysatorschicht oder die Gasdiffusionsschicht seinerseits mehrschichtig auszuführen. Zu den möglichen und vorteilhaften Schichtaufbauten wird auf den bekannten Stand der Technik verwiesen.

Es ist offensichtlich, dass die Gaskammer und die Gasdiffusionsschicht und die Katalysatorschicht und die Wasserkammer vorteilhaft umlaufend abgedichtet sein müssen, um die Gaskammer und die Wasserkammer als Kavitäten realisieren zu können. Dabei ist offensichtlich, dass entsprechende Anschlüsse zur Einleitung und zur Ableitung von Fluiden in und aus der Gaskammer respektive Wasserkammer notwendig sind.

In einfacher und zugleich vorteilhafter Weise grenzt die Gaskammer unmittelbar an die Kathodenplatte an.

Besonders vorteilhaft ist es, wenn die Gasdiffusionsschicht an die Gaskammer angrenzt.

Eine effektive CO2 Elektrolyse kann erreicht werden, wenn die Katalysatorschicht unmittelbar an die Gasdiffusionsschicht angrenzt.

Besonders vorteilhaft ist es, wenn die Wasserkammer an die Katalysatorschicht angrenzt.

In einfacher und zugleich vorteilhafter Weise grenzt die Wasserkammer an die Anodenplatte an.

Dabei bildet bevorzugt die Anodenplatte zugleich die Anode der Elektroysezelle.

Funktionsgemäß ist es erforderlich, dass eine Spannung an der Elektrolysezelle angelegt werden kann. Dabei ist es besonders vorteilhaft, wenn der Stromanschluss an die Elektrolysezelle auf der Anodenseite an der Anodenplatte und an der Kathodenseite an der Kathodenplatte erfolgt.

Zur Erzielung einer möglichst gleichmäßigen Spannungsverteilung an der Katalysatorschicht und der Reduzierung der Nachteile durch ein leitendes Gitter auf der Anodenseite ist es erfindungsgemäß vorgesehen, dass mehrere Strombrücken die Gasdiffusionsschicht durchdringen und dabei eine elektrisch leitende Verbindung von der Katalysatorschicht unmittelbar oder mittelbar zur Kathodenplatte herstellen.

Durch die erfindungsgemäße Ausführungsform wird der Stromfluss zur Katalysatorschicht auf mehrere Strombrücken verteilt und somit ist keine entsprechende Zuführung vom äußeren Rand der Katalysatorschicht in die Fläche der Katalysatorschicht notwendig. Somit entfällt die Notwendigkeit ein leitendes Gitter ausgehend vom Rand der Katalysatorschicht in der Wasserkammer und somit im Elektrolyt anzuordnen. Dieses gestattet eine flexible Dimensionierung der Elektrolysezelle und hebt die Beschränkung auf kleine Baugrößen auf.

Naheliegend und vorteilhaft kann unvermindert kann der umlaufende Rand der Katalysatorschicht elektrisch kontaktiert sein, so dass der Randbereich der Katalysatorschicht mit Spannung versorgt wird.

Zur Gewährleistung eines definierten Abstandes zwischen der Kathodenplatte und der Gasdiffusionsschicht, insbesondere zur Sicherung der Lage der Gasdiffusionsschicht sowie der Weite der Gaskammer, ist es besonders vorteilhaft, wenn Kontaktsockel als Abstandshalter eingesetzt werden. Dabei ist es einerseits notwendig, dass die Kontaktsockel mit der Kathodenplatte verbunden sind. Gegenüberliegend ist die Anlage an der Gasdiffusionsschicht vorgesehen. Es ist offensichtlich, dass sich die Kontaktsockel in der Gaskammer befinden bzw. diese durchdringen.

Die Kontaktsockel können auf verschiedene Weisen realisiert werden. So ist es einerseits möglich, diese mittels jeweils mit einer Steckverbindung in eine jeweilige Aufnahme in der Kathodenplatte einzusetzen.

Vorteilhaft ist es jedoch, wenn die Kontaktsockel fest mit der Kathodenplatte verbunden sind, so dass sich die Handhabung im Herstellungsprozess vereinfacht. Eine Fixierung ist dabei beispielsweise durch eine Schraubverbindung möglich. Besonders vorteilhaft ist es jedoch, wenn die Kathodenplatte mit den Kontaktsockeln einstückig bzw. integral hergestellt werden. Dies kann beispielsweise durch ein Gießverfahren oder durch ein additives Herstellungsverfahren erfolgen.

In besonders vorteilhafter Weise ermöglichen die Kontaktsockel eine elektrisch leitende Verbindung zwischen der Kathodenplatte und den Strombrücken. Naheliegend bedarf es hierzu einer elektrisch leitenden Verbindung zwischen der Kathodenplatte und den Kontaktsockeln. Entsprechend ist es besonders vorteilhaft, wenn die Strombrücken elektrisch leitend mit den Kontaktsockeln verbunden sind. Da die Strombrücken die Gasdiffusionsschicht durchdringen und die Kontaktsockeln an der Gasdiffusionsschicht anliegen, reduziert sich hierdurch die notwendige Baugröße der Strombrücken.

Die elektrisch leitende Verbindung der Strombrücken mit der Kathodenplatte bei Vorhandensein von Kontaktsockeln kann auf unterschiedliche Weise realisiert werden.

In einer ersten besonders vorteilhaften Ausführungsform ist vorgesehen, dass die Strombrücken in Aufnahmen in den Kontaktsockeln lösbar eingesteckt sind. Hierdurch wird eine größere Gestaltungsfreiheit für die Kontaktierung der Katalysatorschicht durch die Strombrücken ermöglicht.

In einer zweiten alternativen Variante ist vorgesehen, dass die Strombrücken fest mit den Kontaktsockeln verbunden sind. Analog zur Verbindung der Kontaktsockeln mit der Kathodenplatte kann dies beispielsweise durch eine Schraubverbindung realisiert werden. Ebenso ist eine einstückige bzw. integrale Bauweise der Kontaktsockel mit den Strombrücken möglich.

Die Kontaktierung der Katalysatorschicht mittels der Strombrücken kann optimiert werden, wenn die jeweilige Strombrücke die Katalysatorschicht durchdringt. Entsprechend ist es besonders vorteilhaft, wenn zumindest die Mehrzahl der Strombrücken die Katalysatorschicht durchdringt.

Die vorteilhafte Ausführung, bei der zumindest die Mehrzahl der Strombrücken die Katalysatorschicht durchdringt, eröffnet dies besonders vorteilhaft die Möglichkeit auf der Anodenseite der Katalysatorschicht an den Strombrücken ein die Katalysatorschicht abschnittsweise überdeckendes elektrisch leitendes Element anzuordnen. Somit kann eine nochmals verbesserte Kontaktierung der Katalysatorschicht durch das zusätzliche Element bewirkt werden.

Zu berücksichtigen ist jedoch die Reduzierung der effektiven Fläche durch das zusätzliche Element und entsprechend sollte dies nur so groß gewählt werden, dass eine zuverlässige Kontaktierung der Katalysatorschicht bei der jeweiligen Strombrücke erfolgt.

In einer ersten Alternative ist vorteilhaft vorgesehen, dass auf den Strombrücken jeweils ein Brückenkopf angeordnet wird, welcher als Scheibe mit der jeweiligen Strombrücke und mit der Katalysatorschicht die Strombrücke umgebend elektrisch leitend verbunden ist.

In einer zweiten Alternative ist vorteilhaft vorgesehen, dass zumindest eine Querverbindung eingesetzt wird, welche zumindest zwei Strombrücken elektrisch leitend miteinander verbindet und hierbei zugleich mit einer Anlage auf der Anodenseite der Katalysatorschicht eine zusätzliche Kontaktierung der Katalysatorschicht bewirkt.

Bevorzugt verbindet eine Querverbindung zwei Strombrücken, wobei mehrere Querverbindungen vorhanden sind. Auch kann vorgesehen sein, dass eine Querverbindung beispielsweise drei oder vier Strombrücken verbindet.

Ebenso ist es in einer dritten Alternative möglich, die erste Alternative mit Brückenköpfen angeordnet bei einem Teil der Strombrücken und die zumindest eine Querverbindung angeordnet bei den gleichen Strombrücken mit Brückenköpfen und/oder bevorzugt einem anderen Teil der Strombrücken zu kombinieren.

Zur Verbindung der Brückenköpfe und/oder der zumindest einen Querverbindung mit den Strombrücken kann einerseits vorgesehen sein, dass die elektrisch leitende Verbindung durch eine Anlage der Brückenköpfe und/oder der Querverbindung auf den Strombrücken hergestellt wird.

Die zuvor genannte Verbindung der Brückenköpfe und/oder der zumindest einen Querverbindung mit Anlage an den Strombrücken ist in dem Fall besonders vorteilhaft, wenn in Kombination die Strombrücken fest mit den Kontaktsockeln verbunden sind.

Alternativ ist es besonders vorteilhaft, wenn die Brückenköpfe und/oder die zumindest eine Querverbindung fest und/oder einstückig mit den Strombrücken verbunden sind.

Die alternative Verbindung der Brückenköpfe und/oder der zumindest einen Querverbindung mit den Strombrücken ist besonders vorteilhaft, wenn die Strombrücken in den Kontaktsockeln lösbar eingesteckt werden.

Besonders vorteilhaft ist es in jedem Fall, wenn in der Wasserkammer keine leitende Verbindung ausgehend von den Strombrücken und sofern vorhanden den Brückenköpfen und/oder der zumindest einen Querverbindung zum Elektrolyt besteht. Hierzu kann beispielsweise eine elektrisch nicht-leitende Beschichtung vorgesehen sein.

Sofern eine elektrisch nicht-leitende Beschichtung angegeben ist, so kann immer alternativ eine elektrisch nicht-leitende Abdeckung oder Ummantelung vorgesehen sein. Eine kleine Baugröße für die elektrische Isolierung wird jedoch vorteilhaft mit einer elektrisch nicht-leitenden Beschichtung erreicht.

Weiterhin kann es je nach Dimensionierung der Elektrolysezelle sowie der Steifigkeit der Gasdiffusionsschicht und der Katalysatorschicht vorteilhaft sein, wenn in der Wasserkammer zumindest ein Abstandshalter angeordnet wird. Dabei ist es erforderlich, dass eine definierte Lage des Abstandshalters zwischen der Anodenplatte und der Katalysatorschicht gegeben ist.

Der Abstandshalter soll somit sicherstellen, dass sich der Abstand zwischen der Anodenplatte und der Katalysatorschicht nicht aufgrund von Verformungen der Katalysatorschicht verändert.

In Verbindung mit den Kontaktsockeln kann mit dem Abstandshalter zuverlässig die Position der Katalysatorschicht und der Gasdiffusionsschicht festgelegt werden. Somit kann sichergestellt werden, dass die flächige Anlage der Katalysatorschicht auf der Gasdiffusionsschicht gewährleistet ist.

Dabei kann in einer ersten Option vorgesehen sein, dass mehrere Abstandshalter in der Wasserkammer angeordnet werden. Dabei sind die Abstandshalter fest mit der Anodenplatte zu verbinden, so dass deren Lage festgelegt ist.

In einer zweiten Option kann vorgesehen sein, dass ein einteiliger Abstandshalter zwischen der Anodenplatte und der Katalysatorschicht in der Wasserkammer eingelegt wird. Zur Gewährleistung einer möglichst ungehinderten Strömung in der Wasserkammer ist hierzu der Abstandshalter gitterförmig zu gestalten. Dabei sollte die überdeckte Fläche der Anodenplatte und der Katalysatorschicht möglichst gering ausfallen und der gitterförmige Abstandhalter ansonsten von der Anodenplatte und insbesondere der Katalysatorschicht beabstandet sein.

In beiden Fällen ist es besonders vorteilhaft, wenn der Abstandshalter auf der Seite der Katalysatorschicht an den jeweilen Strombrücken und abschnittweise die Strombrücken umgebend auf der Katalysatorschicht anliegt. Bei Vorhandensein der Brückenköpfe und/oder der zumindest einen Querverbindung erfolgt die Anlage vorteilhaft auf den Brückenköpfen bzw. auf der Querverbindung zumindest an der Position der Strombrücken.

Besonders vorteilhaft kann durch die Anlage des einen Abstandshalters bzw. der mehreren Abstandshalter auf den Brückenköpfen und/oder der zumindest einen Querverbindung die Kontaktierung der Brückenköpfe und/oder der zumindest einen Querverbindung auf der Katalysatorschicht verbessert werden.

Es ist vorteilhaft möglich, die Brückenköpfe und/oder die zumindest eine Querverbindung fest am gitterförmigen Abstandshalter oder den mehreren mit der Anodenplatte verbundenen Abstandshaltern anzuordnen. Hierdurch wird die Handhabung im Montageprozess vereinfacht. Beispielsweise können die Brückenköpfe und/oder die zumindest eine Querverbindung durch eine Klebeverbindung befestigt werden.

Insbesondere wenn ein gitterförmiger Abstandshalter eingesetzt, ist es besonders vorteilhaft, wenn die Brückenköpfe und/oder die zumindest eine Querverbindung fest verbunden sind. Hierbei kann - abhängig vom Herstellungsverfahren - vorgesehen sein, dass diese auf der Kathodenseite eingegossen sind. Alternativ kann vorgesehen sein, dass der Abstandshalter aus einem leitenden Material hergestellt wird, welcher auf der Kathodenseite die Brückenköpfe und/oder die zumindest eine Querverbindung bildet und gegenüber der Anodenplatte isoliert ist.

Wird ein Abstandshalter eingesetzt und besteht dieser im Kern aus einem leitenden Material, so ist besonders vorteilhaft vorzusehen, dass vom Abstandshalter ausgehend keine leitende Verbindung zum Elektrolyt in der Wasserkammer gegeben ist. Dazu ist der Abstandhalter auf der zur Wasserkammer weisenden Seite vorteilhaft mit einer nicht elektrisch leitenden Beschichtung (oder anderweitigen elektrischen Isolierung) zu versehen.

Ebenso darf es - sofern vorhanden - über den Abstandshalter keine leitende Verbindung von den Strombrücken zur Anodenplatte geben. Hierzu ist, sofern der Kern des Abstandshalters aus einem leitenden Material besteht - die Oberfläche zur Anodenplatte weisend und/oder zur Katalysatorschicht weisend gleichfalls mit einer elektrisch nicht-leitenden Beschichtung (oder anderweitigen elektrischen Isolierung) zu versehen.

Alternativ zur elektrischen Verbindung der Strombrücken mit der Kathodenplatte über Kontaktsockeln ist es möglich, zumindest einen Stromverteiler vorzusehen. Hierbei ist der Stromverteiler zur Festlegung dessen Position als auch zur elektrischen Verbindung an der Kathodenplatte befestigt. Weiterhin ist vorgesehen, dass jeweils zumindest zwei Strombrücken mit einem Stromverteiler elektrisch leitend verbunden sind. Bevorzugt ist ein Stromverteiler jeweils für vier kontaktierte Strombrücken vorhanden. Hierbei ist es unerheblich, ob Kontaktsockeln zur Stützung der Gasdiffusionsschicht vorhanden sind.

In einfacher Ausführung befindet sich der Stromverteiler analog zur Ausführung mit den Kontaktsockeln im Wesentlichen in der Gaskammer.

Der Einsatz eines Stromverteilers ermöglicht bevorzugt eine elastische Ausführungsform, so dass eine elastische Verformung des Stromverteilers zwischen den Strombrücken und der Kathodenplatte möglich ist. Hierdurch kann eine unzulässige Druckbelastung aufgrund unterschiedlicher Abmessungen und/oder thermischer Dehnungen in der Elektrolysezelle - insbesondere bei einer Festlegung der Abstände durch ein äußeres Gehäuse - vermieden werden.

In diesem Fall kann vorteilhaft die Abstützung der Gasdiffusionsschicht gleichfalls durch den elastischen Stromverteiler erfolgen. Somit kann auch dessen Lage und Anlage an der Katalysatorschicht vorteilhafter gesichert werden, ohne dass es zusätzlicher Kontaktsockel bedarf.

Zur elektrisch leitenden Verbindung der Strombrücken mit dem Stromverteiler kann einerseits vorgesehen sein, dass die Strombrücken am Stromverteiler lose anliegen. Dies ist insbesondere vorteilhaft, wenn die Strombrücken vorteilhaft mit fest verbundenen Brückenköpfen und/oder zumindest einer Querverbindung versehen sind. Dies ermöglicht eine einfachere Montage der Strombrücken durch die Katalysatorschicht und die Gasdiffusionsschicht ausgehend von der Anodenseite gegenüberliegend zum Stromverteiler auf der Kathodenseite.

Anderseits kann vorgesehen sein, dass die Strombrücken fest mit dem Stromverteiler verbunden werden. Dieses erfordert die Montage des Stromverteilers mit den Strombrücken von der Kathodenseite durch die Gasdiffusionsschicht. Vorteilhaft ist diese Variante insbesondere, wenn die Strombrücken die Katalysatorschicht nicht durchdringen, sondern nur auf der Kathodenseite an der Katalysatorschicht anliegen.

Die Anzahl der Strombrücken je Fläche der Katalysatorschicht kann unterschiedlich gewählt werden. Je größer die Anzahl gewählt wird, um so gleichmäßiger wird die Spannungsverteilung über die Fläche der Katalysatorschicht sein. Zugleich besteht jedoch das Problem, dass mit einer steigenden Anzahl an Strombrücken sich zugleich die wirksame Fläche der Katalysatorschicht reduziert. Zudem erhöht eine hohe Anzahl an Strombrücken den Aufwand zur Herstellung der Elektrolysezelle.

Als vorteilhaft hat es sich daher erwiesen, bezogen auf die Fläche der Katalysatorschicht, zumindest eine Strombrücke je 10 cm2 vorzusehen. Demgegenüber sollte die Anzahl der Strombrücken nicht größer gewählt werden als eine Strombrücke je 1 cm2.

### KURZBESCHREIBUNG DER ZEICHNUNGEN

**FIG 1** zeigt schematisch im Schnitt ein erstes Ausführungsbeispiel für den Aufbau einer erfindungsgemäßen Elektrolysezelle. Hierbei verbinden Strombrücken die Kathodenplatte mit der Katalysatorschicht.

**FIG 2** zeigt schematisch im Schnitt ein zweites Ausführungsbeispiel für den Aufbau einer erfindungsgemäßen Elektrolysezelle. Hierbei wird die Verbindung von den Strombrücken zur Kathodenplatte über Kontaktsockel hergestellt.

**FIG 3** zeigt schematisch im Schnitt ein drittes Ausführungsbeispiel für den Aufbau einer erfindungsgemäßen Elektrolysezelle. Ausgehend vom Beispiel aus Fig. 2 ist ergänzend ein Abstandshalter in der Wasserkammer angeordnet.

**FIG 4** zeigt schematisch im Schnitt ein viertes Ausführungsbeispiel für den Aufbau einer erfindungsgemäßen Elektrolysezelle. Alternativ werden hier mehrere Abstandshalter verwendet und in der Gaskammer sind anstelle der Kontaktsockel Stromverteiler vorhanden.

### BESCHREIBUNG DER AUSFÜHRUNGSFORMEN

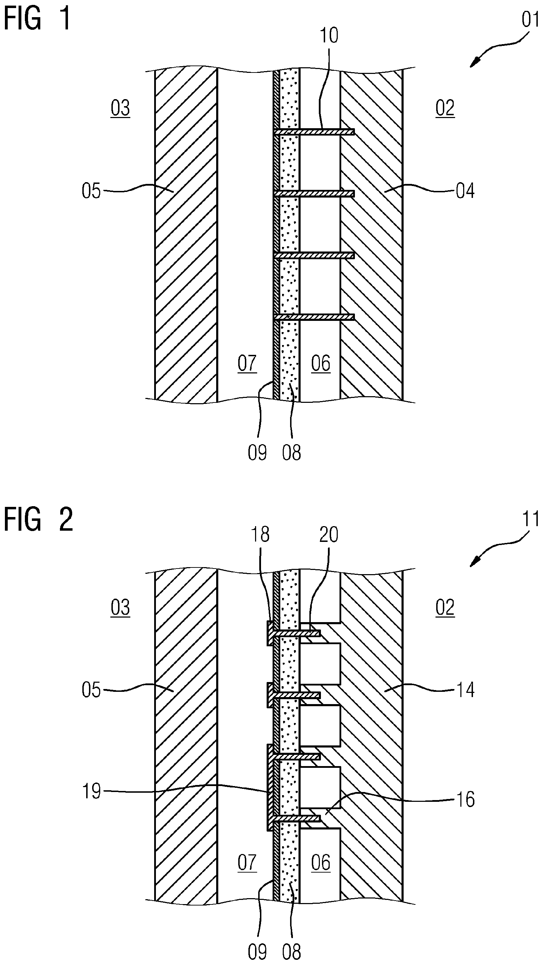

In der **Figur 1** wird ein erstes Ausführungsbeispiel für eine erfindungsgemäße Elektrolysezelle 01 skizziert. Dargestellt ist in dieser vereinfachten Skizze der Aufbau der Elektrolysezelle 01 in der Abfolge von der Kathodenseite 02 zur Anodenseite 03.

Auf der Kathodenseite 02 befindet sich die Kathodenplatte 04. Bestimmungsgemäß erfolgt ein Stromanschluss an der Kathodenplatte 04. Angrenzend an die Kathodenplatte 04 befindet sich die Gaskammer 06. Im Betrieb der Elektrolysezelle 01 wird der Gaskammer das umzusetzende Kohlendioxid (CO2) zugeführt.

Auf der Anodenseite 03 befindet sich die Anodenplatte 05. Analog befindet sich bestimmungsgemäß der andere Stromanschluss an der Anodenseite 05. Angrenzend an die Anodenseite 05 befindet sich die Wasserkammer 07. Im Betrieb der Elektrolysezelle 01 befindet sich in der Wasserkammer 07, das Elektrolyt zur Ermöglichung der Elektrolyse. Dabei kann die Anodenplatte 05 zugleich die Anode bilden.

Die Gaskammer 06 wird von der Wasserkammer 07 durch eine Gasdiffusionselektrode getrennt. Diese besteht aus einer Gasdiffusionsschicht 08 sowie einer Katalysatorschicht 09. Hierbei ist vorgesehen, dass die Gasdiffusionsschicht 08 elektrisch nicht-leitend und demgegenüber die Katalysatorschicht 09 elektrisch leitend ist.

Um die CO2 Elektrolyse zu ermöglichen, ist es erforderlich, die Katalysatorschicht 09 elektrisch mit der Kathodenplatte 04 zu verbinden. Hierzu ist erfindungsgemäß vorgesehen, dass mehrere Strombrücken 10 auf der Fläche der Katalysatorschicht verteilt eingesetzt werden. Diese 10 durchdringen dabei die Gasdiffusionsschicht 08 und sind im Kontakt mit der Katalysatorschicht 09.

Im ersten Ausführungsbeispiel ist dabei vorgesehen, dass die Strombrücken 10 unmittelbar in der Kathodenplatte 04 befestigt sind, sodass sowohl deren Position festgelegt ist als auch die elektrische Verbindung gewährleistet ist.

In der **Figur 2** wird schematisch der Aufbau eines zweiten Ausführungsbeispiels für eine erfindungsgemäße Elektrolysezelle 11 skizziert. Dargestellt ist analog in der vereinfachten Skizze der Aufbau der Elektrolysezelle 11 in der Abfolge von der Kathodenseite 02 zur Anodenseite 03.

Auf der Kathodenseite 02 befindet sich wiederum die Kathodenplatte 14 mit der angrenzenden Gaskammer 06. Im Unterschied zum vorherigen Beispiel ist nunmehr jedoch vorgesehen, dass an der Kathodenplatte 14 integral Kontaktsockel 16 angebracht sind. Diese 16 sind an denjenigen Positionen vorhanden, an denen sich jeweils die Strombrücken 20 befinden.

Dabei ist vorgesehen, dass die Kontaktsockel 16 an der Gasdiffusionsschicht 08 anliegen und somit die Lage der Gasdiffusionsschicht 08 auf der Kathodenseite 02 festgelegt ist.

Im Gegensatz zum vorherigen Beispiel ist hier vorgesehen, dass die Strombrücken 20 auf der Anodenseite 03 der Katalysatorschicht 09 entweder mit Brückenköpfen 18 versehen oder mit einer Querverbindung 19 verbunden sind.

Die Brückenköpfe 18 liegen hierbei elektrisch leitend ringförmig um die Strombrücken 20 an der Katalysatorschicht 09 an. Bei der Querverbindung 19 ist vorgesehen, dass diese 19 ebenso im Bereich zwischen zwei Strombrücken 20 an der Katalysatorschicht 09 punktuell oder linienförmig elektrisch leitend anliegt.

Durch diese Ausführungsform wird die Kontaktierung der Katalysatorschicht 09 gegenüber vorherigem Beispiel deutlich verbessert. Zu berücksichtigen ist die Abdeckung der wirksamen Fläche der Katalysatorschicht 09, so das darauf zu achten ist, dass die Brückenköpfe 18 respektive der Querverbindung 19 nur so groß gewählt werden, dass eine zuverlässige Kontaktierung der Katalysatorschicht 09 bei ausgehend von den Strombrücken 20 gewährleistet ist.

Die Anordnung der Kontaktsockel 16 in Verbindung mit der Ausführung der Strombrücken 20 mit integralen Brückenkopf 18 bzw. Querverbindung 19 ermöglicht die fortlaufende Kontaktierung der Strombrücken 20 mit dem Kontaktsockeln 16 durch Verwendung einer Steckverbindung.

Sofern durch die Steckverbindung nach der Montage der Strombrücken 20 deren Lage zuverlässig festgelegt ist, so kann mit dieser Lösung zugleich die Position der Katalysatorschicht 09 und der Gasdiffusionsschicht 08 in der Elektrolysezelle 11 gesichert werden.

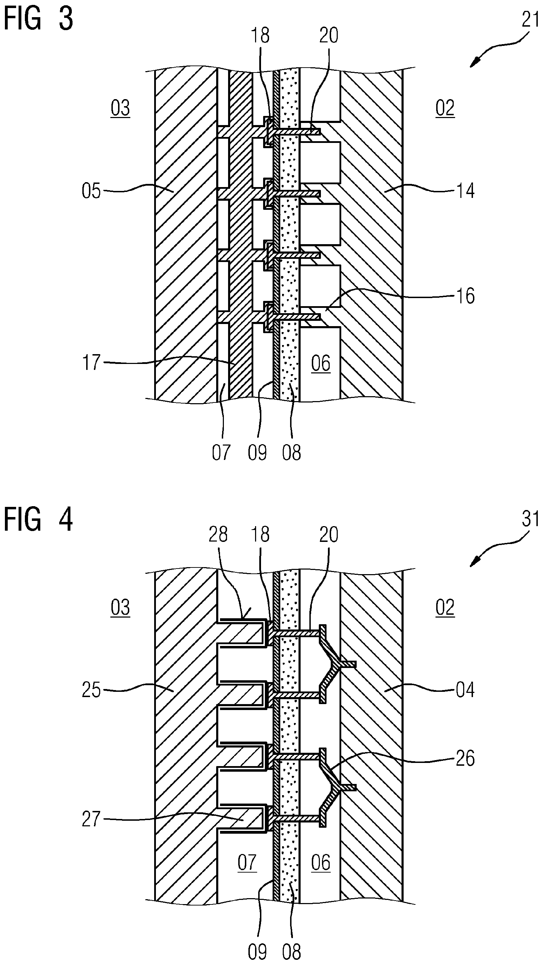

In der **Figur 3** wird ein weiteres Ausführungsbeispiel für eine erfindungsgemäße Elektrolysezelle 21 ausgehend vom vorherigen Beispiel schematisch skizziert. Insofern soll nur auf die Unterschiede zur vorherigen Ausführung aus Figur 2 eingegangen werden.

In diesem Ausführungsbeispiel ist vorgesehen, dass sich in der Wasserkammer 07 ein gitterförmiger Abstandshalter 17 befindet. Dabei ist durch Verwendung einer gitterförmigen Gestalt für den Abstandshalter 17 nach Möglichkeit eine Behinderung der freien Strömung in der Wasserkammer 07 zu vermeiden.

Zumindest ist vorgesehen, dass der Abstandshalter 17 eine definierte Position in der Wasserkammer 07 besitzt. Dabei ist es weiterhin erforderlich, dass auf der Anodenseite 03 eine Anlage an der Anodenplatte 05 und gegenüberliegend auf der Kathodenseite 02 eine Anlage jeweils an der Position einer Strombrücken 20 gegeben ist.

In diesem Ausführungsbeispiel ist dazu vorgesehen, dass der Abstandhalter 17 die jeweiligen Brückenköpfe 18 überdeckt. Hierzu kann auch vorgesehen sein, dass zur Montage die Strombrücken 20 mit dem Brückenköpfen 18 zuvor am Abstandhalter 17 beispielsweise durch Kleben befestigt werden.

Weiterhin ist ansatzweise zu erkennen, dass der Abstandhalter zur Wasserkammer 07 weisend die Brückenköpfe 18 umschließt. Bei Verwendung eines elektrisch nicht-leitenden Materials für den Abstandhalter 17 ist somit eine elektrisch leitende Verbindung von den Brückenköpfen 18 zum Elektrolyten in der Wasserkammer 07 unterbunden.

In der **Figur 4** wird ein weiteres Ausführungsbeispiel für eine erfahrungsgemäß Elektrolysezelle 31 skizziert. Im Gegensatz zu den beiden vorherigen Ausführungsbeispielen wird in diesem Fall auf die Verwendung von Kontaktsockeln verzichtet.

Zur Realisierung der elektrisch leitenden Verbindung von den Strombrücken 20 zur Kathodenplatte 04 ist in diesem Ausführungsbeispiel vorgesehen, dass Stromverteiler 26 eingesetzt werden. Diese 26 sind hierbei an der Kathodenplatte 04 befestigt und befinden sich ansonsten analog der Kontaktsockel in der Gaskammer 06. Nunmehr ist in diesem Ausführungsbeispiel vorgesehen, dass jeweils vier Strombrücken 20 an jeweils einem Stromverteiler 26 elektrisch leitend anliegen.

Weiterhin ist vorgesehen, dass die Stromverteiler 26 elastisch verformbar ausgeführt sind, so dass Ungenauigkeiten in der Lage der Strombrücken 20 anliegend an die Stromverteiler 26, beispielsweise aufgrund von Toleranzen oder thermischen Bindungen, ausgeglichen werden können.

Weiterhin ist in diesem Ausführungsbeispiel vorgesehen, dass anstelle eines gitterförmigen Abstandhalters nunmehr eine Mehrzahl Abstandhalter 27 verwendet werden, welche 27 jeweils integral an der an Anodenplatte 25 befestigt sind.

Zur Verhinderung einer elektrisch leitenden Verbindung zwischen den Abstandhaltern 27 und dem Elektrolyten in der Wasserkammer 07 ist weiterhin vorgesehen, dass die Abstandhalter 27 auf der zur Wasserkammer 07 weisenden Seite sowie auf der zur Kathodenseite 02 weisenden Seite eine elektrisch nicht-leitende Beschichtung 28 aufweisen.

Weiterhin kann ebenso zur Vereinfachung der Montage vorgesehen sein, dass die jeweiligen Strombrücken 20 mit dem Brückenköpfen 18 beispielsweise durch eine Klebeverbindung an den jeweiligen Abstandshaltern 27 befestigt werden.

## Patentansprüche

1. Elektrolysezelle (01,1,21,31) zur Elektrolyse von CO2 mit einer Kathodenseite (02) und einer Anodenseite (03) umfassend in unmittelbarer oder mittelbarer Folge
- eine Kathodenplatte (04,14),
- eine Gaskammer (06),
- eine Gasdiffusionsschicht (08),
- eine Katalysatorschicht (09),
- eine Wasserkammer (07), und
- eine Anodenplatte (05,25);
**gekennzeichnet durch**
mehrere Strombrücken (10,20), welche (10,20) elektrisch leitend mit der Kathodenplatte (04,14) und der Katalysatorschicht (09) verbunden sind und die Gasdiffusionsschicht (08) durchdringen.

2. Elektrolysezelle (11,21,31) nach Anspruch 1,
**gekennzeichnet durch** Kontaktsockel (16), welche (16) mit der Kathodenplatte (14) verbunden sind und an der Gasdiffusionsschicht (08) anliegen;
wobei insbesondere die Kontaktsockel (16) fest und/oder einstückig mit der Kathodenplatte (14) verbunden sind.

3. Elektrolysezelle (11,21) nach Anspruch 2,
wobei die Strombrücken (20) mit den Kontaktsockeln (16) elektrisch leitend verbunden sind.

4. Elektrolysezelle (11, 21) nach Anspruch 3,
wobei die Strombrücken (20) in den Kontaktsockeln (16) lösbar eingesteckt sind.

5. Elektrolysezelle nach Anspruch 3,
wobei die Strombrücken fest und/oder einstückig mit den Kontaktsockeln (16) verbunden sind.

6. Elektrolysezelle (01,11,21,31) nach einem der Ansprüche 1 bis 5,
wobei zumindest die Mehrzahl der Strombrücken (10,20) die Katalysatorschicht (09) durchdringt.

7. Elektrolysezelle (11,21,31) nach Anspruch 6,
**gekennzeichnet durch** Brückenköpfe (18) und/oder zumindest eine Querverbindung (19), welche (18,19) auf der Anodenseite (03) der Katalysatorschicht (09) mit den Strombrücken (20) elektrisch leitend verbunden sind und an der Katalysatorschicht (09) leitend anliegen;
wobei insbesondere jeder Brückenkopf (18) mit jeweils einer Strombrücke (20) elektrisch leitend verbunden ist; und/oder
wobei insbesondere jede Querverbindung (19) mit zumindest zwei Strombrücken (20) elektrisch leitend verbunden ist.

8. Elektrolysezelle (11, 21,31) nach Anspruch 7,
wobei die Brückenköpfe (18) und/oder Querverbindung (19) fest und/oder einstückig mit den Strombrücken (20) verbunden sind.

9. Elektrolysezelle (21,31) nach einem der Ansprüche 1 bis 8,
**gekennzeichnet durch** zumindest einen Abstandshalter (17), welcher (17) zwischen der Anodenplatte (05) und der Katalysatorschicht (09) in der Wasserkammer (07) fixiert ist.

10. Elektrolysezelle (21,31) nach Anspruch 9,
wobei mehrere Abstandshalter (27) fest mit der Anodenplatte (25) verbunden sind.

11. Elektrolysezelle (21,31) nach Anspruch 9,
wobei der Abstandshalter (17) gitterförmig gestaltet ist.

12. Elektrolysezelle (21,31) nach Anspruch 11,
wobei der Abstandshalter (17,27) die Brückenköpfe (18) und/oder die Querverbindung (19) umfasst.

13. Elektrolysezelle (11,21,31) nach einem der Ansprüche 7 bis 12,
wobei die Strombrücken (10) und/oder die Brückenköpfe (18) und/oder die Querverbindung (19) zur Wasserkammer (07) weisend eine nicht-leitende Beschichtung aufweisen; und/oder
wobei der Abstandshalter (17,27) aus einem elektrisch nicht-leitenden Material besteht oder zumindest zur Wasserkammer (07) weisend eine nicht-leitende Beschichtung (28) aufweist.

14. Elektrolysezelle (31) nach einem der Ansprüche 1 bis 13,
**gekennzeichnet durch** einen Stromverteiler (26), welcher (26) an der Kathodenplatte (04) befestigt ist und der mit mehreren Strombrücken (20) elektrisch verbunden ist.

15. Elektrolysezelle (31) nach Anspruch 14,
wobei der Stromverteiler (26) eine elastische Verformung zwischen der Kathodenplatte (04) und den Strombrücken (20) ermöglicht.

16. Elektrolysezelle (01,11,21,31) nach einem der Ansprüche 1 bis 15,
wobei bezogen auf die Fläche der Katalysatorschicht (09) zumindest eine Strombrücke (10, 20) je 10 cm2 und maximal eine Strombrücke (10, 20) je 1 cm2 vorhanden ist.
